# EUROPEAN PATENT APPLICATION

(11) **EP 1 855 483 A2**
(43) Date of publication of application: **14.11.2007**
(21) Application number: 07100761.1
(22) Date of filing: 18.01.2007
(51) Int. Cl.: H04N 7/24

(54) **Apparatus and method for transmitting and receiving moving pictures using near field communication**

(30) Priority: 10.05.2006 KR 20060042114
(71) Applicant: Samsung Electronics Co., Ltd., Suwon-si, Gyeonggi-Do (KR)
(72) Inventor: Lee, Seung-Cheol, c/o Samsung El. Co., Ltd., Suwon-si, Gyeonggi-do (KR); Lee, Sang-Bong, c/o Samsung El. Co., Ltd., Suwon-si, Gyeonggi-do (KR); Woo, Sang-Wook, c/o Samsung El. Co., Ltd., Suwon-si, Gyeonggi-do (KR); Park, Hyun-Il, c/o Samsung El. Co., Ltd., Suwon-si, Gyeonggi-do (KR); Lee, Min-Ji, c/o Samsung El. Co., Ltd., Suwon-si, Gyeonggi-do (KR)
(74) Representative: Grünecker, Kinkeldey, Stockmair & Schwanhäusser Anwaltssozietät

(57) **Abstract**

An apparatus and a method for transmitting and receiving moving picture data, which can stream the moving picture through the near narrowband communication network in real time by using a portable terminal having a near field communication module like a Bluetooth module. The apparatus transmits some of audio visual data stored in the form of a file which is prescribed by Moving Picture Experts Group to the portable terminal connected to the near field communication network to allow the portable terminal to replay the audio visual data. Then, the apparatus divides the residual data into files with a desired size and transmits the files to the portable terminal, so the portable terminal can simultaneously receive and replay the moving picture.

## Description

The present invention relates to an apparatus and method for transmitting and receiving moving pictures using near field communication, and more particularly to an apparatus and method for transmitting and receiving moving pictures, which can transmit and receive moving pictures using a near field communication during the viewing of the moving picture or during the filming of the moving pictures.

Portable terminals which users can carry, such as cellular phones, Personal Digital Assistants (PDAs), etc., have been realizing increasing popularity. Such portable terminals provide additional functions, such as a game function, an alarm function, and a Moving Picture Experts Group Layer-3 (MP3) Player function which uses image and sound, as well as communication functions, such as voice communication and Short Message Service (SMS), according to the development of communication technology. Thus, users of portable terminals can utilize various additional functions as well as the voice communication function.

A portable terminal having a Bluetooth module mounted therein in order to carry out near field communication with another device, such as another portable terminal or a headset, has been made commercially available. A user of a portable terminal in which a Bluetooth module is mounted can listen to MP3 music stored in the portable terminal using a wireless headset, or communicate with a partner using a near field communication device. It is possible to transmit data, such as camera files, name cards, and phone book information, between portable terminals with a Bluetooth communication function. As described above, it is possible to carry out a specific function, for example, a voice communication function, a camera function, etc., using a portable terminal having a Bluetooth module mounted thereon, and to transmit sound data, such as MP3 files, from the portable terminal to another portable terminal having a Bluetooth module.

In order to carry out data communication between portable terminals using Bluetooth communication, logical channels must be bi-directionally formed, and a function of transmitting data in the form of a file in a direction must be realized. In a case of single medium, such as an MP3 file or a voice communication, it is possible to transmit multimedia data through a one-way logical channel. However, it is impossible to transmit a moving picture stream including video and audio data in real-time. In order to overcome the above-mentioned problem, a User Datagram Protocol (UDP) class is realized in the form of packet switching on a Bluetooth channel, and a plurality of logical channels is secured through existing commercially available moving picture transport protocol such as Real-time Transport Protocol (RTP) or Session Initiation Protocol (SIP), to make it possible to carry out communication. However, this method includes disadvantages involving economical cost and effort.

Accordingly, the present invention has been made to solve the above-mentioned problems occurring in the prior art.lt is the object of the present invention to provide an apparatus and method for transmitting and receiving moving pictures including a large scale of video and audio data through real-time streaming, using a near field communication.

This object is solved by the subject matter of the independent claims.

Preferred embodiments are defined in the dependent claims.

In order to accomplish the object of the present invention, according to an aspect of the present invention, there is provided an apparatus for transmitting and receiving moving picture data using near field communication, the apparatus including a communication module for carrying out near field communication; a moving picture replaying unit for replaying a moving picture file; and a controller for operating the moving picture replaying unit to transmit and replay stored moving picture files, dividing the stored moving picture files to correspond to a buffer size of a recipient portable terminal in consideration of a bandwidth of the near field communication and a bit ratio of the moving picture files to create a temporary video file and a temporary audio file, and delaying the transmission of the temporary file for a transmission time according to a calculation of the bit ratio of the moving picture files and sequentially transmitting the created files through the near field communication module.

Further, the apparatus includes a camcorder for outputting moving picture data; and an encoder for compressing the moving picture data to create a file, wherein memory stores the compressed file, and the controller divides the compressed file, stored in memory, to correspond to a buffer size of a recipient portable terminal in consideration of the bandwidth of the near field communication and the bit ratio of the moving picture files to create a temporary file and sequentially transmit the created files to the recipient portable terminal through the near field communication module.

Further, the controller checks if the temporary files are an initial data used for transmitting the moving picture when the temporary file is received, analyzes the received initial data after creating a region for an imaginary file in the memory if the temporary file is the initial data, and operates the moving picture replaying unit to replay the imaginary file after copying information on video/audio data and a header into each corresponding region.

In order to accomplish the object of the present invention, according to another aspect of the present invention, there is provided a method for transmitting and receiving moving picture data using near field communication in a portable terminal including a near field communication module for carrying out near field communication and a moving picture replaying unit for replaying a moving picture file, the method including operating the moving picture replaying unit to replay and transmit the moving picture file, and dividing the stored moving picture file to correspond to a buffer size of a recipient portable terminal in consideration of a bandwidth of the near field communication and a bit ratio of the moving picture file to create a video temporary file and an audio temporary file; and delaying the transmission of the temporary files for a transmission time according to a calculation of the bit ratio of the moving picture, and then sequentially transmitting the created temporary files through the near field communication module.

The method further includes creating moving picture data being taken by a camcorder into a compressed file to transmit the moving picture data being taken by the camcorder in real-time; dividing the compressed file to correspond to a buffer size of the recipient portable terminal in consideration of a bandwidth of near field communication and a bit ratio of the moving picture, to create temporary files; and sequentially transmitting the created temporary files to a recipient portable terminal through the near field communication module.

The method further includes checking if the temporary files are an initial data used for transmitting the moving picture file when the temporary files are received; creating a region for an imaginary file in memory if the temporary file is the initial data; and analyzing the received initial data to copy information on video/audio data and a header into each corresponding region, and then replaying the imaginary file.

The present invention will be more apparent from the following detailed description taken in conjunction with the accompanying drawings, in which:
FIG. 1 is a block diagram illustrating an apparatus for transmitting and receiving moving pictures using near field communication according to the present invention;
FIG. 2 is a view illustrating a temporary file created for transmission of moving picture data in a transmitting terminal, and an imaginary file created for reception and storage of the temporary file in a reception terminal, according to the present invention;
FIG. 3 is a view illustrating updating of the address of the imaginary file according to the present invention;
FIG. 4 is a flowchart illustrating processes for transmitting replayed moving pictures using a near field communication while replaying the moving pictures stored in the portable terminal according to the present invention;
FIG. 5 is a flowchart illustrating processes for transmitting moving pictures being taken in real-time using the near field communication according to the present invention; and
FIG. 6 is a flowchart illustrating processes for receiving moving pictures and replaying the received moving pictures using the near field communication according to the present invention.

Hereinafter, preferred embodiments of the present invention will be described with reference to the accompanying drawings. The same reference numerals denote the same structural elements throughout the accompanying drawings. In the following description of the present invention, a detailed description of known functions and configurations incorporated herein is omitted to avoid making the subject matter of the present invention unclear.

The present invention provides a method for real-time streaming of moving pictures based on a file through a narrowband near field communication network using a portable terminal having a module for the near field communication, such as a Bluetooth module. Especially, the present invention transmits and replays a part of Audio Visual data stored in the form of a file prescribed by Moving Picture Experts Group (MPEG) of International Organization for Standardization/International Electrotechnical Commission (ISO/IEC) to a remote portable terminal connected to the near field communication network. Then, the present invention divides the residual data into files with a predetermined size to transmit the divided files, and allows the portable terminal to simultaneously carry out replaying and receiving of the moving pictures.

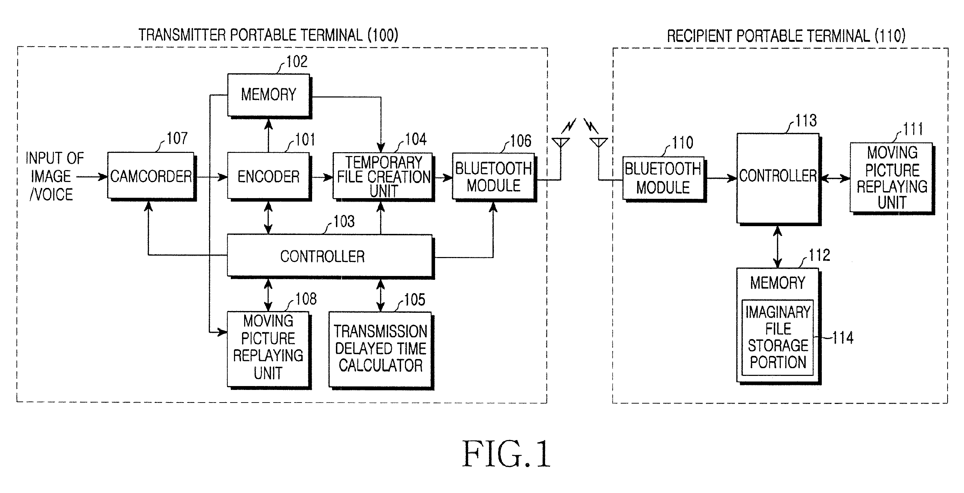

FIG. 1 shows an apparatus for transmitting and receiving moving pictures using near field communication according to an embodiment of the present invention. Portable terminals having Bluetooth modules 106 and 116 respectively will be described as an example, but any module for near field communication may be mounted in the portable terminals. A transmitter portable terminal 100 and a recipient terminal 110 will be separately described, but one portable terminal carries out both the functions of a transmission terminal 100 for transmitting moving pictures and the other functions of a reception terminal 110 for receiving and replaying the moving pictures.

The transmission terminal 100 includes a controller 103, a camcorder 107, an encoder 101, a memory 102, a temporary file creation unit 104, a transmission delayed time calculator 108, and a Bluetooth module 106.

The controller 103 controls the entire operation of the portable terminal according to the present invention. Further, the controller 103 determines if there is a user request for real-time transmitting of moving pictures being taken by the camcorder 107, or for transmitting of moving pictures stored in the memory 102 while replaying the moving pictures.

If the controller 103 determines that there is a user request for real-time transmitting of moving pictures being taken through the camcorder 107, the controller 103 inputs video and audio data taken by the camcorder 107 into the encoder 101, and compresses the video data and the audio data through a video encoder and an audio encoder, respectively. Next, the controller 103 stores a separate header in which a position and a frame size of the encoded video and audio is stored along with the video and audio data in the form of a file in the memory 102. Then, when the video and audio data in the form of file are created, the controller 103 calculates the adjustable volume of a buffer in view of communication bandwidth and bit ratio of the moving picture for the near field communication, and continuously divides the video/audio data file into temporary files with the volume of the buffer calculated through the temporary file creation unit 104.

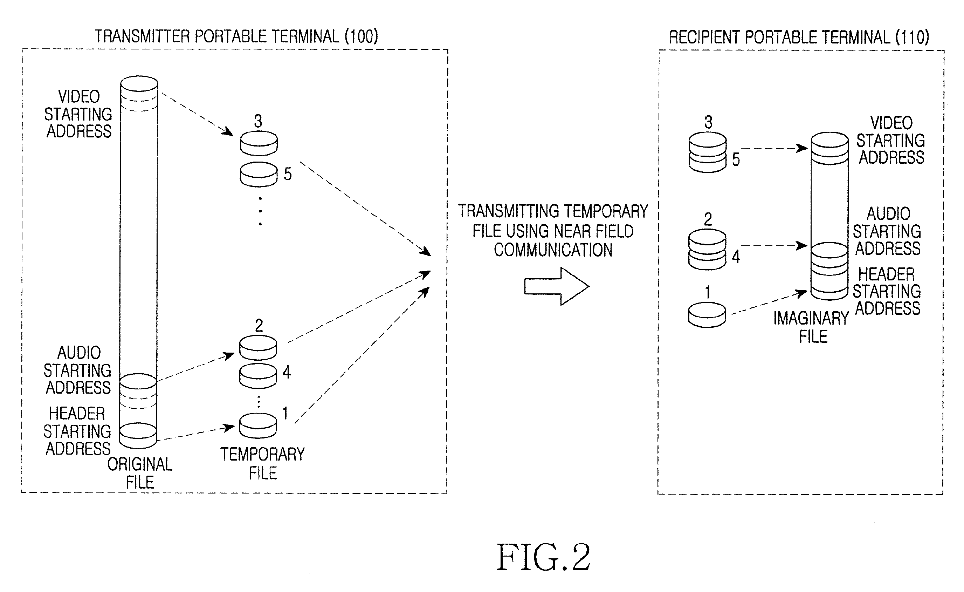

As shown in FIG. 2, the temporary files are divided from a video start address into temporary video files corresponding to the volume of the buffer, and from an audio start address into temporary audio files corresponding to the volume of the buffer in order to create the temporary video files and the temporary audio files. Then, the controller 103 sequentially transmits the created temporary files through the Bluetooth module to the reception portable terminal 110. At the time when the moving picture taken by the camcorder 107 is transmitted, the controller 103 creates a header indicating a start offset value of the video and audio data and the volume of the stored data in an initial data, and the video and audio data stored in a start portion of the video and audio as the temporary files, respectively, which in turn transmits the header and the temporary files to the recipient portable terminal 110. As described above, the controller 103 transmits the temporary audio and video files in order of the division of the temporary files after transmitting the initial data.

Next, when the controller 103 determines to transmit the moving pictures while replaying the moving pictures stored in the memory 102, the controller 103 operates the moving picture replaying unit 108. Then, the controller 103 parses the moving picture which is stored in the memory 102 and is to be transmitted, and in the case of the initial data, creates the header indicating the start offset value of the video and audio data and the volume of the data, and the video and audio data stored in the start portion of the video and audio as the temporary files to transmit the header and the video/audio data to the recipient portable terminal 110. Then, the controller 103 calculates the amount of bit stream replayed by the moving picture replaying unit 111 of the recipient portable terminal 110 through the bit ratio of the moving pictures, and delayed time for preventing the overflow or underflow of the temporary file storage unit 112 through the transmission delayed-time calculator 105.

The bit ratio of the moving picture is indicated by bits per second and can be known through information on the number of frames, the replaying time, and the file volume which are obtained by parsing the header in the form of a file based on MPEG class. When the file volume is divided by the replaying time, the number of bites per second will be known. On the other hand, the transmitter portable terminal separately transmits information on the format and volume of the file at the initial time, so the recipient portable terminal can identify the replaying bit ratio. In the camcorder, in which a replaying time is not limited, the data from the camcorder has no information on its replaying time and the transmission of the data is ended by user input. In this case, the controller reads a bit ratio indicated in the header of each AV data so that the transmitter/recipient portable terminals manage delayed time or buffer.

Then, the controller 103 sequentially creates a portion of data in the video/audio data storage region of the memory 102 as temporary files, and delays the transmission of the temporary files for a calculated transmission delayed time before the temporary files are transmitted. Further, the controller 103 deletes the original temporary files when the transmission of the temporary files is completed.

The configuration of the recipient portable terminal 110 for receiving and replaying the temporary files when the recipient portable terminal 110 receives the moving pictures in the form of temporary files from the transmitter portable terminal 100 will be described. The recipient portable terminal 110 includes a controller 113, a moving picture replaying unit 111, a memory 112 having an imaginary file storage portion 114, and a Bluetooth module 116.

The controller 113 of the recipient portable terminal 110 checks if the received data is an initial data. If the received temporary files include a header, the controller 113 determines that the received data is regarded as the initial data. Thus, the controller converts the received temporary files into imaginary files and stores the imaginary files in the imaginary file storage portion of the memory 112. A process of converting the temporary files into imaginary files and storing the imaginary files will be described with reference to FIG. 2. The transmitter portable terminal 100 divides a large volume media file, i.e. original file, having an audio portion, a video portion, and a header portion into the temporary files having a minimum buffer capacity, and transmits the temporary files to the recipient portable terminal 110 using near field communication.

On the other hand, the recipient portable terminal 110 receives the divided temporary files to copy and store each audio/video temporary file and the header file at a predetermined position corresponding to a starting address of a video/audio header in the region for storing the imaginary file. More particularly, when the transmitter portable terminal 100 sequentially transmits a temporary file 1, a temporary file 2, a temporary file 3, a temporary 4, and a temporary file 5, the recipient portable terminal 110 stores the temporary file 1 which is the header in a header starting address of the storage portion 114. Further, the recipient portable terminal stores the temporary file 2 in the audio starting address, and the temporary file 3 in the video starting address. Then, the recipient portable terminal stores the received temporary file 4 in a region corresponding to an address next to the address in which the temporary file 2 is stored, and the temporary file 5 in a region corresponding to an address next to the address in which the temporary file 3 is stored.

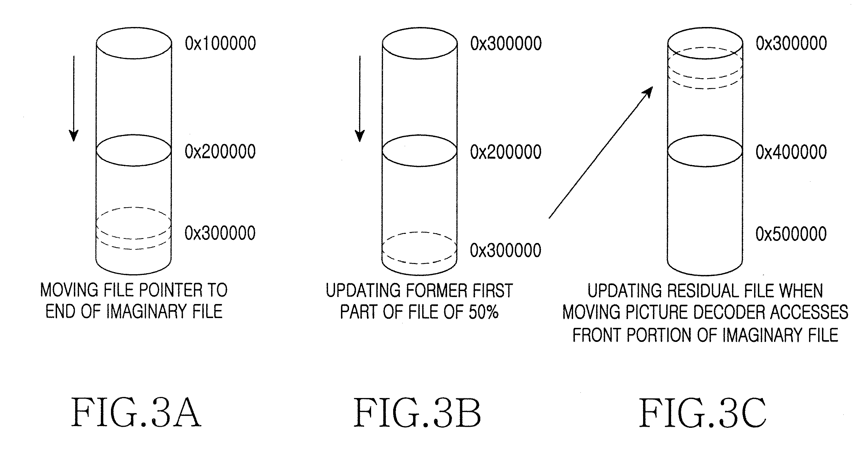

The data transmitted from the transmitter portable terminal 100 may be a large volume of data such as the data taken by the camcorder or the stored moving picture data. Further, since the recipient portable terminal 110 maps the large volume of data to the imaginary files with a small volume and stores the mapped imaginary files, the address of the imaginary files must be updated. An operation of updating the address of the imaginary file will be described with reference to FIG. 3. The imaginary file may be divided into three regions, i.e. an audio data region, a video data region, and a header region, each of which is managed. In FIG. 3, one region among the audio data region, the video data region, and the header region will be described.

As shown in FIG. 3A, while the file corresponding to a lower portion of the storage space divided into two portions is replayed by the moving picture replaying unit 111, the address of half the starting address of the imaginary file is updated. However, this is merely an example, and the ratio of the address to be updated may be suitably adjusted. Then, the temporary files to be received are copied and stored to correspond to the updated imaginary address. Further, if the file stored in an initial portion corresponding to the starting address of the imaginary file is replayed by the moving picture replaying unit 111, the updated imaginary address is updated again. As described above, the addresses of an upper portion of the storage space are imaginarily and continuously increased and updated, so that the recipient portable terminal receives and replays the large volume of data using a small memory area.

If the data transmitted from the transmitter portable terminal 100 are data taken by the camcorder 107, the data can be infinitely replayed. Assuming that the data taken by the camcorder 107 are sequentially stored in one file, the addresses corresponding to the position of the audio/video data are sequentially stored in the header with the increasing of the addresses to a size of a frame. If not an already stored moving picture but the moving picture being taken by a camcorder in real-time is transmitted, addresses which are newly calculated based on the initial value, are stored in the header. Thus, it is possible to reduce the overhead necessary for allowing the recipient portable terminal to operate the imaginary files when a starting address of each does not infinitely increase and goes beyond a certain value.

Further, the controller 113 operates the moving picture replaying unit 111 and checks if a file to be replayed is currently stored in the imaginary file storage portion 114. If there is an imaginary file to be replayed, it starts to replay the imaginary file. Then, the controller 113 periodically checks if the temporary file is received through the Bluetooth module 116. When the temporary file is received, the controller 113 sequentially copies the temporary file at a position next to the stored temporary file in the imaginary file storage 114 to create the imaginary file. Further, the controller enables the moving picture replaying unit 111 to continuously replay the imaginary file. Then, the controller 113 deletes the replayed file.

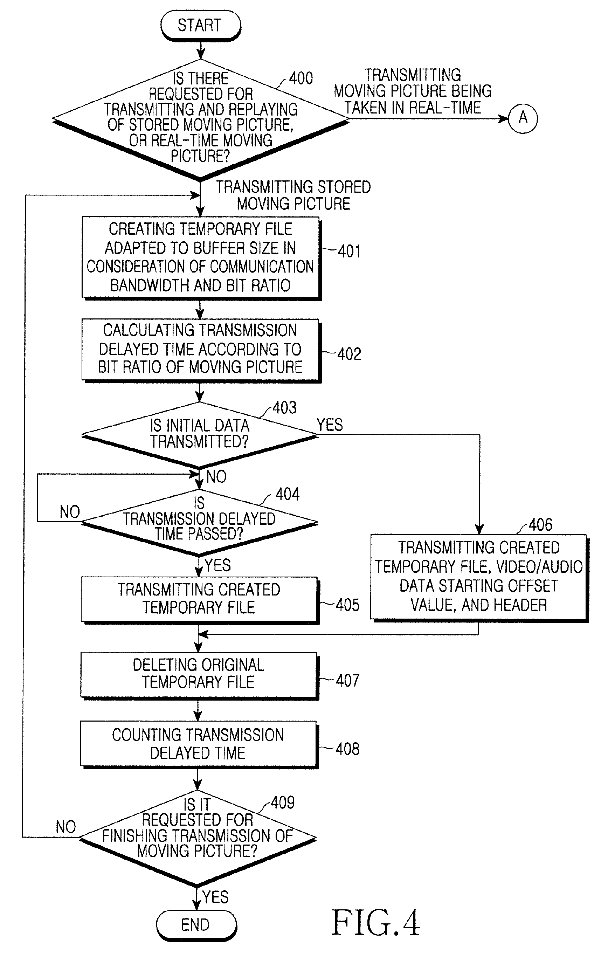

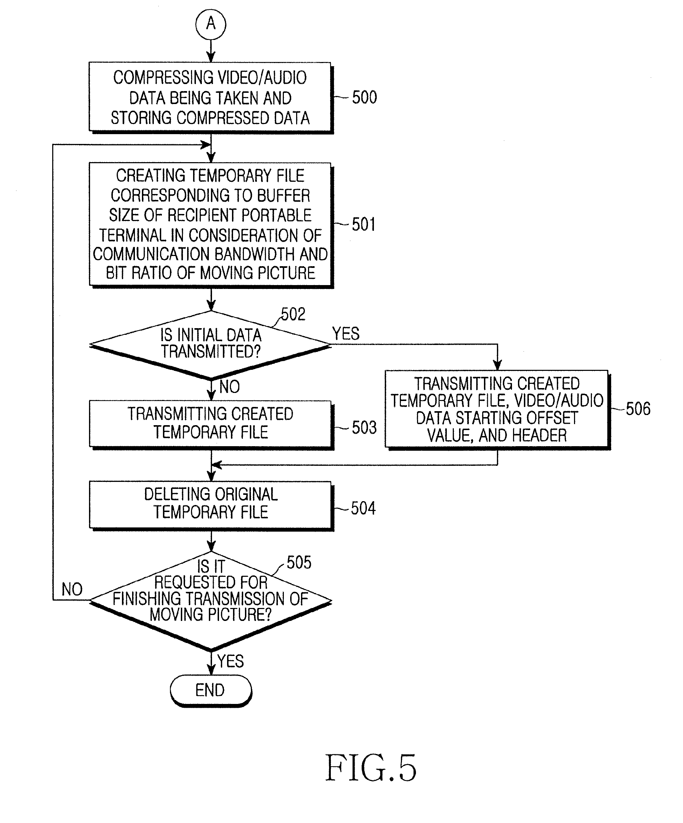

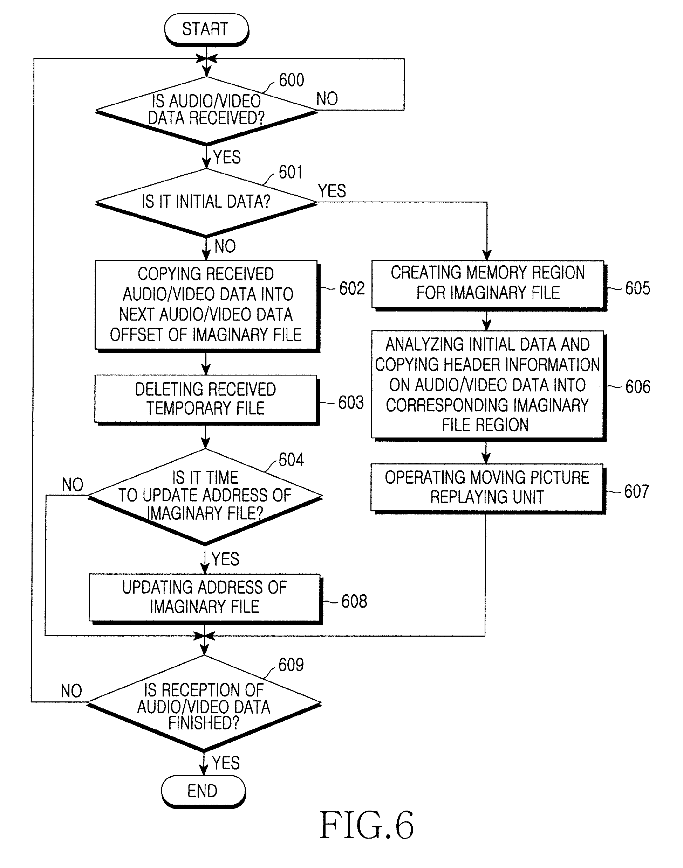

Processes of transmitting the moving picture stored in the memory 102 of the transmitter portable terminal 100 of FIG. 1 while replaying the moving picture, and directly transmitting the moving picture being taken by the camcorder 107 using near field communication will be described in detail with reference to FIGS. 4 and 5. Further, processes of receiving and replaying the moving picture in the recipient portable terminal 110 will be described with reference to FIG. 6.

The process of transmitting the moving picture to the recipient portable terminal using near field communication while the stored moving picture is replayed in the transmitter portable terminal 100 will be described with reference to FIG. 4.

The controller 103 checks if a user requests that a moving picture being taken in real-time is transmitted, or the stored moving picture is replayed and transmitted, at step 400. As the result of step 400, if it is requested to transmit the moving picture being taken in real-time, the controller 103 performs the process illustrated in FIG. 5. The process of FIG. 5 will be described below. Further, if it is requested to transmit the moving picture being taken, resulting from step 400, the controller 103 proceeds to step 401, and enables the temporary file creation unit 104 to create temporary files corresponding to a buffer size to replay the moving picture in the recipient receiver 110 in consideration of a bit ratio of the moving picture and bandwidth of the Bluetooth communication. Then, the controller 103 enables the transmission delayed time calculator 105 to calculate a transmission delayed time depending on the bit ratio of the moving picture, and proceeds to step 403 to check if the transmitted data is an initial data. If the transmitted data is the initial data, the controller 103 proceeds to step 406 and transmits data including the created temporary files, a video/audio data starting offset value, and a header. Then, the controller 103 proceeds to step 407.

If the transmitted data is not the initial data resulting from step 403, the controller proceeds to step 404 and delays the transmission of the data for a desired time, i.e. the transmission delayed time, before the transmission of the created temporary files. Then, the controller transmits the created temporary file at step 405. Next, the controller 103 deletes the original temporary file, and counts transmission delayed time at step 408. Continuously, the controller 103 ends the operation of transmitting the moving picture if it is requested to end the transmission of the moving picture at step 409. Otherwise, the controller proceeds to step 401 and creates a temporary file to be transmitted, next to the transmitted temporary file in the moving picture.

Next, the process of transmitting the moving picture taken by the camcorder 107 of the transmitter portable terminal 100 using the near field communication will be described with reference to FIG. 5.

If it is requested to transmit the moving picture being taken in real-time, resulting from checking of FIG. 4, the controller 103 proceeds to step 500 and compresses the video/audio data to store the compressed data. Then, the controller 103 creates a temporary file corresponding to a buffer size of the recipient portable terminal in consideration of a bit ratio of the moving picture and a communication bandwidth at step 501. Next, the controller 103 proceeds to step 502 and checks if the data to be transmitted is an initial data. If the data to be transmitted is the initial data resulting from step 502, the controller 103 proceeds to step 506 and transmits data including the created temporary file, a video/audio data start offset value, and a header, like at step 406. Then, the controller proceeds to step 504 to delete the original temporary file. If the data to be transmitted is not the initial data resulting from step 502, the controller 103 transmits the created temporary file and proceeds to step 504 to delete the original temporary file. Then, if it is requested to end the transmission of the moving picture at step 505, the controller 103 ends the operation of transmitting the moving picture. Otherwise, the controller 501 proceeds to step 501 and creates a temporary file from the compressed file, which is transmitted after the transmission of the currently transmitted temporary file.

The process of receiving and replaying the moving picture in the recipient portable terminal 110 will be described with reference to FIG. 6.

The controller 113 checks if the audio/video data file is received. If the audio/video data file is received in the recipient portable terminal, the controller 113 proceeds to step 601 and checks if the received file is the initial data. In other words, the controller 113 checks if the received file includes a header. If the received file includes the header, the controller determines that the received file be the initial data. Thus, the controller 113 proceeds to step 605 and creates a region in the memory 112 in order to store an imaginary file. In the present invention, although the imaginary storage portion 114 is separately provided as the region for storing the imaginary file, a portion of the memory 112 may be used as a space for storing the imaginary file. The controller 113 proceeds from step 605 to step 606 and analyzes the initial data, which in turn copies information on the audio/video data and the header into the imaginary file region. Then, the controller proceeds to step 607 and enables the moving picture replaying unit 111 to replay the imaginary file stored in the imaginary file storage unit 114. Next, the controller 113 proceeds to step 609.

On the other hand, when the controller 113 determines that the received file is not the initial data, at step 601, the controller 113 proceeds to step 602, and copies the received audio/video data into a next audio/video data offset on the imaginary file. Then, the controller 113 deletes the original temporary file at step 603, and proceeds to step 604 to check if it is time to update the imaginary file address. The time point to update the imaginary file address is distinguished into two time points, i.e. one time point to update about 50% of the starting address of the imaginary file according to whether a file corresponding to a lower part or a file corresponding to an upper part is replayed, after the storage space is divided into two parts, i.e. upper part and lower part, as shown in FIG. 3A, and the other time point to update the imaginary address after updating the address.

When it is determined that it is a time point to update 50% of the starting address of the imaginary file as the file corresponding to the lower part is replayed by the moving picture replaying unit 111, the controller 113 updates 50% of the starting address of the imaginary file as shown in FIG. 3B. Further, when it is determined that it is a time point to update the imaginary address after updating the address as the file corresponding to the upper part is replayed by the moving picture replaying unit 111, the controller 113 updates the imaginary address after updating the address as shown in FIG. 3C. Specifically, a large volume of data can be continuously received and replayed in a small memory region by imaginarily and continuously increasing and updating the address of the upper part.

In the meantime, the controller proceeds from steps 607 and 608 to step 609, and checks if the reception of the audio/video data is finished. If the reception of the audio/video data is finished, the controller 113 finishes the operation of receiving and replaying the audio/video data.

As described above, the present invention can transmit some of the file type audio visual data to the remote portable terminal connected to a near field communication network and enable the portable terminal to replay the audio visual data. Then, the residual data is divided into files with a desired size, which are transmitted to the remote portable terminal so the portable terminal simultaneously receives and replays the moving picture. Thus, there is an advantage in that portable terminals can share and simultaneously replay the moving picture. Specifically, a portable terminal remote from a host portable terminal can replay images and audio being recorded by a camcorder of the host portable terminal with small time delay, and also replay the audio visual data, such as music video, simultaneously.

While the invention has been shown and described with reference to certain preferred embodiments thereof, it will be understood by those skilled in the art that various changes in form and details may be made therein without departing from the scope of the invention as defined by the appended claims.

## Claims

1. An apparatus for transmitting and receiving moving picture data using near field communication, the apparatus comprising:
a communication module for carrying out near field communication;
a moving picture replaying unit for replaying a moving picture file; and
a controller for operating the moving picture replaying unit to transmit and replay stored moving picture files, dividing the stored moving picture files to correspond to a buffer size of a recipient portable terminal in consideration of a bandwidth of the near field communication and a bit ratio of the moving picture files to create a temporary video file and a temporary audio file, and delaying transmission of the temporary files for a transmission time according to a calculation of the bit ratio of the moving picture files and sequentially transmitting the created files through the near field communication module.

2. The apparatus as claimed in claim 1, further comprising:
a camcorder for outputting moving picture data;
a memory; and
an encoder for compressing the moving picture data to create a file,
wherein the memory stores the compressed file, and the controller divides the compressed file, stored in the memory, to correspond to the buffer size of a recipient portable terminal in consideration of the bandwidth of the near field communication and the bit ratio of the moving picture files to create the temporary files and sequentially transmit the created files to the recipient portable terminal through the near field communication module.

3. The apparatus as claimed in claim 1 or 2, wherein the controller deletes original temporary files which are already transmitted.

4. The apparatus as claimed in one of claims 1 to 3, wherein the controller divides a video starting address of the moving picture files to correspond to the buffer size during the creation of the temporary files to create the temporary video file, and divides an audio starting address of the moving picture files to correspond to the buffer size to create the temporary audio file.

5. The apparatus as claimed in one of claims 1 to 4, wherein the controller transmits initial data including video/audio temporary files, a video/audio data starting offset value, and a header during a first transmission of data.

6. The apparatus as claimed in one of claims 1 to 5, wherein the controller checks if the temporary files are an initial data used for transmitting the moving picture files when the temporary files are received, analyzes the received initial data after creating a region for an imaginary file in memory if the temporary files are the initial data, and operates the moving picture replaying unit to replay the imaginary file after copying information on video/audio data and a header into each corresponding region.

7. The apparatus as claimed in one of claims 1 to 5, wherein the controller checks if the temporary file is an initial data used for transmitting the moving picture files when the temporary files are received, analyzes the received initial data after creating a region for an imaginary file in the memory if the temporary files are the initial data, and operates the moving picture replaying unit to replay the imaginary file after copying information on the video/audio data and the header into each corresponding region.

8. The apparatus as claimed in claim 6 or 7, wherein the controller copies the received temporary files into an audio/video data offset next to the currently stored temporary files in the imaginary file storage region if the received temporary files are not the initial data, and then continuously replays the imaginary file.

9. The apparatus as claimed in one of claims 6 to 8, wherein the controller copies the received temporary files into the corresponding temporary file storage region, and then updates the imaginary file address when it is a time to update the imaginary file address.

10. The apparatus as claimed in one of claims 6 to 9, wherein the controller divides the imaginary file storage region into a lower part and upper part, and recognizes a time point to update an intermediate address of the starting address of the imaginary file when the file corresponding to the lower part is replayed, and a time point to update the imaginary address after the update of the address when the file corresponding to the upper part is replayed.

11. The apparatus as claimed in one of claims 6 to 10, wherein the controller updates the intermediate address of the starting address of the imaginary file when it is determined that it is the time point to update the starting address of the imaginary file, and updates the imaginary address after the update of the address when it is determined that it is the time point to update the imaginary address.

12. A method for transmitting and receiving moving picture data using near field communication in a portable terminal including a near field communication module for carrying out near field communication and a moving picture replaying unit for replaying the moving picture file, the method comprising the steps of:
operating the moving picture replaying unit when the portable terminal replays and transmits the moving picture file, and dividing the moving picture file to correspond to a buffer size of a recipient portable terminal in consideration of a bandwidth of the near field communication and a bit ratio of the moving picture file to create a video temporary file and an audio temporary file; and
delaying the transmission of the temporary files for a transmission time according to a calculation of the bit ratio of the moving picture file, and then sequentially transmitting the created temporary files through the near field communication module.

13. The method as claimed in claim 12, further comprising:
creating moving picture data being taken by a camcorder into a compressed file to transmit the moving picture data being taken by the camcorder in real-time;
dividing the compressed file to correspond to a buffer size of the recipient portable terminal in consideration of a bandwidth of near field communication and a bit ratio of the moving picture to create temporary files; and
sequentially transmitting the created temporary files to the recipient portable terminal through the near field communication module.

14. The method as claimed in claim 12 or 13, further comprising deleting original temporary files which are transmitted.

15. The method as claimed in one of claims 12 to 14, wherein the controller divides a video starting address of the moving picture file to correspond to the buffer size during the creation of the temporary files to create the temporary video file, and divides an audio starting address of the moving picture file to correspond to the buffer size to create the temporary audio file.

16. The method as claimed in one of claims 12 to 15, further comprising transmitting initial data including video/audio temporary files, a video/audio data starting offset value, and a header during a first transmission of data.

17. The method as claimed in one of claims 12 to 16, further comprising:
checking if the temporary files are an initial data used for transmitting the moving picture file when the temporary files are received;
creating a region for an imaginary file in a memory if the temporary files are the initial data; and
analyzing the received initial data to copy information on video/audio data and a header into each corresponding region, and then replaying the imaginary file.

18. The method as claimed in claim 17, further comprising copying the received temporary files into an audio/video data offset next to currently stored temporary files in the imaginary file storage region if the received temporary file is not the initial data, and then continuously replaying the imaginary file.

19. The method as claimed in claim 17, further comprising copying the received temporary files into an audio/video data offset next to currently stored temporary file in the imaginary file storage region if the received temporary files are not the initial data, and then continuously replaying the imaginary file.

20. The method as claimed in claim 18 or 19, further comprising copying the received temporary files into the corresponding temporary file storage region to determine if it is time to update the imaginary file address, and updating the imaginary file address when it is time to update the imaginary file address.

21. The method as claimed in claim 20, wherein it is determined that it is time to update an intermediate address of the starting address of the imaginary file if a file, corresponding to a lower part of the imaginary file storage region which is divided into two parts, is created, and that it is time to update an imaginary address after the update of the address if a file, corresponding to an upper part of the imaginary file storage region, is created.

22. The method as claimed in claim 21, further comprising updating the intermediate address of the starting address of the imaginary file when it is determined that it is time to update the intermediate address of the starting address of the imaginary file, and updating the imaginary address when it is determined that it is time to update the imaginary address after the update of the address.
